# EUROPÄISCHE PATENTSCHRIFT

(11) **EP 1 336 551 B1**
(45) Veröffentlichungstag und Bekanntmachung des Hinweises auf die Patenterteilung: **23.11.2005**
(21) Anmeldenummer: 03001926.9
(22) Anmeldetag: 30.01.2003
(51) Int. Cl.: B62D 25/16, B60R 21/34

(54) **Kotflügelanordnung für ein Kraftfahrzeug**
Wheel guard assembly for a vehicle
Dispositif de garde-boue pour un véhicule automobile

(30) Priorität: 19.02.2002 DE 10206768
(43) Veröffentlichungstag der Anmeldung: 20.08.2003
(73) Patentinhaber: DaimlerChrysler AG, 70567 Stuttgart (DE)
(72) Erfinder: Weik, Eberhard, 71263 Weil der Stadt (DE); Schelling, Thorsten, 71106 Magstadt (DE)

(56) Entgegenhaltungen:
- EP-A- 1 258 417
- DE-A- 3 047 969
- DE-A- 10 009 364
- DE-A- 10 018 735
- PATENT ABSTRACTS OF JAPAN Bd. 2002, Nr. 02, 2. April 2002 (2002-04-02) -& JP 2001 287669 A (TOYOTA MOTOR CORP), 16. Oktober 2001 (2001-10-16)

## Beschreibung

Die Erfindung betrifft eine Kotflügelanordnung für ein Kraftfahrzeug gemäß dem Oberbegriff des Patentanspruchs 1. Eine solche Kotflügelanordnung erstreckt sich zumindest teilweise über einem Fahrzeugaufbau und verläuft entlang eines Seitenrandes einer Fronthaube. Die Oberkante des Kotflügels und der Seitenrand der Fronthaube bilden eine Trennfuge.

Im Zusammenhang mit Maßnahmen für einen verbesserten Schutz von Fußgängern ist es bekannt, Kotflügel im Bereich der der Trennfuge zugeordneten Oberkante nachgiebig zu gestalten und gleichzeitig für eine ausreichende Festigkeit der Verbindung von Kotflügel zu der Karosserie zu sorgen. Hierzu wird beispielhaft auf die DE 100 09 364 A1 verwiesen. Zur Verminderung der strukturellen Steifigkeit der Kotflügeloberkante wird in dieser Druckschrift vorgeschlagen, unterhalb der Oberkante des Kotflügels ein c-förmiges Deformationselement vorzusehen, welches die Oberkante gegen den Fahrzeugaufbau abstützt. Neben dem Deformationselement ist ein separates Abstützteil vorgesehen, welches sich zwischen der Stelle, an dem das Deformationselement mit dem Fahrzeugaufbau zusammenstößt und einem von der Oberkante des Kotflügels beabstandeten Aussenwandabschnitt des Kotflügels erstreckt und für die notwendige Stabilität sorgt.

Weiterhin ist aus der DE 100 09 363 A1 eine die strukturelle Steifigkeit einer Kotflügel-Oberkante vermindernde Konstruktion bekannt, welche ein entlang der Oberkante auf der Innenseite des Kotflügels angeordnetes Verstärkungsteil aufweist, das mit dem Kotflügel ein Hohlprofil bildet. Neben dem Verstärkungsteil ist wiederum ein separates Abstützteil vorgesehen, das das Verstärkungsteil an dem Fahrzeugaufbau abstützt.

Diese beiden Lösungen haben gemeinsam, dass zur Verbindung des Kotflügels mit dem Fahrzeugaufbau mehrere separate Bauteile notwendig sind, die jeweils einzeln hergestellt und montiert werden müssen.

Vor diesem Hintergrund liegt der vorliegenden Erfindung die Aufgabe zugrunde, eine gattungsgemäße Kotflügelanordnung zu schaffen, die einfach herzustellen und einfach zu montieren ist.

Diese Aufgabe wird erfindungsgemäß durch die Merkmale des Patentanspruchs 1 gelöst.

Demnach weist die erfindungsgemäße Anordnung einen Kotflügel mit einer Oberkante sowie ein Verstärkungselement auf. Das Verstärkungselement besteht aus verschiedenen Abschnitten, die jeweils in einem bestimmten Winkel zueinander angeordnet sind. Die verschiedenen Abschnitte des Verstärkungselements bilden mit dem Kotflügel ein Hohlprofil. Die erfindungsgemäße Anordnung zeichnet sich nun dadurch aus, dass das Verstärkungselement über mindestens einen seiner Abschnitte - einem Verbindungsabschnitt - mit dem Fahrzeugaufbau verbunden ist, wobei dieser Verbindungsabschnitt von dem Kotflügel beabstandet ist.

Die erfindungsgemäße Kotflügelanordnung bringt den Vorteil mit sich, dass nur ein Bauteil - das Verstärkungselement - vorgesehen ist welches beide Aufgaben erfüllt: ausreichende Nachgiebigkeit der Kotflügeloberkante zur Verbesserung des Fußgängerschutzes und ausreichende Festigkeit der Verbindung von Kotflügel zu Fahrzeugaufbau. Die Vereinigung der verschiedenen Funktionen in ein Bauteil bringt erhebliche wirtschaftliche Vorteile mit sich, weil nur noch ein Teil hergestellt und montiert werden muss. Dadurch werden sowohl die Herstellungs- aber auch die Montagekosten gesenkt. Eine Senkung dieser Kosten stellt insbesondere bei Produkten, die in Serie gefertigt werden, wie dies bei Kraftfahrzeugen der Fall ist einen sehr großen Vorteil dar.

Vorteilhafte Ausführungsformen der erfindungsgemäßen Lösung sind den Unteransprüchen zu entnehmen.

Gemäß einer Ausführungsform weist das Verstärkungselement einen Deformationsabschnitt auf. Dieser ist mit der Oberkante des Kotflügels verbunden. Der Deformationsabschnitt stützt die Oberkante des Kotflügels auf dem Fahrzeugaufbau ab, ist jedoch so ausgelegt, dass die Oberkante bei einer bestimmten auf sie ausgeübten Kraft nachgibt, wodurch der Deformationsabschnitt deformiert wird. Dabei nimmt der Deformationsabschnitt Energie auf. Um den Deformationsabschnitt ausreichend nachgiebig gestalten zu können, besteht das Verstärkungselement mit seinen verschiedenen Abschnitten bevorzugt aus Metall. Das Maß der Nachgiebigkeit und die Höhe der Energieabsorbtion können beispielsweise über die Stärkte des Deformationsabschnittes oder aber über das konkrete Material beeinflusst werden. Um die Nachgiebigkeit zu erhöhen, ist es denkbar, gezielt Materialschwächungen in den Deformationsabschnitt einzubringen. Bei derartigen Materialschwächungen kann es sich um alle bekannten Schwächungen vom Material handeln. Beispielsweise seien hier Ausnehmungen oder Einkerbungen genannt.

Das Verstärkungselement kann weiterhin einen Abstützabschnitt aufweisen, der an einem von der Kotflügeloberkante beabstandeten Abschnitt des Kotflügels befestigt ist und diesen Teil des Kotflügels auf den Fahrzeugaufbau abstützt. Dieser Abschnitt dient dazu, für eine ausreichende Stabilität der Anbindung des Kotflügels an dem Fahrzeugaufbau zu sorgen. Insbesondere ist es notwendig, Vibrationen zu verhindern aber auch eine Aufnahme von auf den Kotflügel quer ausgerichteten Kräften zu gewährleisten. Die notwendige Festigkeit des Abstützabschnittes kann - analog zu der Auslegung der Eigenschaften des Deformationsabschnittes - über die Materialstärke und/oder die Auswahl des geeigneten Materials erfolgen.

Der Verbindungsabschnitt kann zwischen Deformations- und Abstützabschnitt angeordnet. Deformations- und Abstützabschnitt stellen den notwendigen Abstand zwischen Verbindungsabschnitt und Kotflügel her. Dadurch wird es möglich, die verschiedenen Funktionen des erfindungsgemäßen Verstärkungselementes zu vereinigen. Da das Verstärkungselement einteilig ausgebildet ist, besteht auch der Verbindungsabschnitt bevorzugt aus Metall.

Selbstverständlich ist es auch denkbar, das Verstärkungselement aus einem anderen Material herzustellen, beispielsweise aus einem Kunststoff oder einem faserverstärkten Material. Um die unterschiedlichen Eigenschaften der einzelnen Abschnitte einstellen zu können, ist es denkbar, die einzelnen Abschnitte in unterschiedlichen Stärken auszuführen. Beispielsweise ist es denkbar, den Deformationsabschnitt dünner auszuführen als den Abstützabschnitt. Weiterhin ist es denkbar, den Abstützabschnitt mit einem verstärkend wirkenden Material zu überziehen. Auch möglich ist es, das gesamte Verstärkungselement mit seinen verschiedenen Abschnitten in einer Stärke herzustellen und den Deformationsabschnitt wie bereits beschrieben gezielt zu schwächen.

Das Verstärkungselement kann beispielsweise einen u-förmigen Querschnitt aufweisen, wobei ein Schenkel den Deformations- und der andere Schenkel den Abstützabschnitt bildet. Die Querverbindung der beiden Schenkel wird durch den Verbindungsabschnitt hergestellt. Eine solche Form hat den Vorteil, dass sie sich besonders einfach herstellen lässt.

Das Verstärkungselement kann sich in Fahrzeuglängsrichtung einstückig entlang der gesamten Oberkante des Kotflügels erstrecken. Auf diese Weise muss nur ein Verstärkungselement pro Kotflügel hergestellt werden. Es ist aber auch denkbar, mehrere Verstärkungselemente entlang der Oberkante des Kotflügels hintereinander anzuordnen.

Gemäß einer Ausführungsform sind Deformations- und Abstützabschnitt im wesentlichen parallel zueinander ausgerichtet. An den beiden Abschnitten können Befestigungsbereiche vorgesehen sein. Besonders vorteilhaft in Bezug auf die der Erfindung zugrundeliegende Aufgabe ist es, wenn diese Befestigungsbereiche einstückig mit den Abschnitten verbunden sind. Denkbar ist es, dass die Befestigungsbereiche aus dem selben Material bestehen, wie das Verstärkungselement und spezielle Merkmale zur einfachen Befestigung aufweisen.

Wenn die Befestigungsbereiche parallel zum Verlauf des Kotflügels ausgerichtet sind, kann das Verstärkungselement sehr einfach mit dem Kotflügel verbunden sind. Die Parallel-Ausrichtung ermöglicht eine Vielzahl von Verbindungsmethoden, von denen hier nur Kleben, Schweißen, Nieten, Börteln und Falzen genannt werden sollen. Es ist aber auch denkbar, eine lösbare Verbindung zwischen Kotflügel und Verstärkungselement vorzusehen.

Das gleiche gilt für die Verbindung zwischen Verstärkungselement und Fahrzeugaufbau. Eine lösbare Verbindung hat in diesem Zusammenhang den Vorteil, dass sehr einfach ein beschädigter Kotflügel gegen einen neuen ausgetauscht werden kann. Bei einer lösbaren Verbindung ist die Demontage eines Kotflügels sehr einfach möglich.

Um diese Montage weiter zu vereinfachen kann in dem Verstärkungselement an geeigneten Stellen eine Ausnehmung vorgesehen sein. Eine solche Ausnehmung ermöglicht es, Befestigungselement zu erreichen, die eine Verbindung zwischen dem Verstärkungselement und dem Fahrzeugaufbau herstellen. Es ist auch denkbar, dass diese Ausnehmungen so ausgelegt sind, dass sie gleichzeitig die gezielte Materialschwächung des Deformationsabschnittes darstellen. Eine solche Doppelfunktion der Ausnehmungen wirkt sich wiederum vorteilhaft auf die Kosten des Verstärkungselementes aus, weil man dadurch bei der Herstellung einen Schritt einsparen kann.

Im folgenden wird die Erfindung anhand der in den Zeichnungen dargestellten Ausführungsbeispiele näher erläutert. Dabei zeigen:
- Fig.1:: einen Querschnitt durch eine Ausführungsform einer erfindungsgemäße Kotflügelanordnung;
- Fig.2:: einen Querschnitt durch eine weitere Ausführungsform einer erfindungsgemäßen Kotflügelanordnung und
- Fig.3:: eine Seitenansicht einer Verbindungsstelle an einer Kotflügeloberkante.

In der Schnittdarstellung ist zunächst einmal eine Fronthaube 1 eines Fahrzeugs mit einem Seitenrand 2 zu erkennen. An diesen Seitenrand 2 der Fronthaube 1 schließt sich die erfindungsgemäße Kotflügelanordnung 3 an. Diese weist einen Kotflügel 4 auf mit einer an seinem der Fronthaube 1 zugewandten Ende angeordneten Oberkante 5. Die Oberkante 5 des Kotflügels 4 und der Seitenrand 2 der Fronthaube 1 bilden eine Trennfuge 6, die im wesentlichen in Fahrzeuglängsrichtung verläuft.

Der Kotflügel 4 ist ein Blechformteil und erstreckt sich zumindest teilweise über einen Fahrzeugaufbau 7. Der sich über den Fahrzeugaufbau 7 erstreckende Teil des Kotflügels 4 ist mehr oder weniger horizontal ausgerichtet. Der Kotflügel 4 umfasst noch einen weiteren Abschnitt, welcher im wesentlichen vertikal ausgerichtet ist und die Seitenverkleidung eines Fahrzeugs bildet. Zwischen diesen beiden Bereichen gibt es einen Übergangsbereich.

Die erfindungsgemäße Kotflügelanordnung 3 umfasst weiterhin ein Verstärkungselement 8. Das Verstärkungselement 8 hat einen im wesentlichen u-förmigen Querschnitt. Das offenen Ende des U's weist in Richtung Kotflügel und bildet mit diesem ein Hohlprofil. Ein Schenkel des Verstärkungselements 8 ist entlang der Oberkante 5 des Kotflügels 4 angeordnet. Im dargestellten Ausführungsbeispiel besteht das Verstärkungselement 8 aus drei unterschiedlichen Abschnitten. Ein Deformationsabschnitt 9 und ein Abstützabschnitt 11 bilden die beiden Schenkel des U's. Zwischen diesen beiden Abschnitten befindet sich der dritte Abschnitt, nämlich ein Verbindungsabschnitt 15, auf den später näher eingegangen wird.

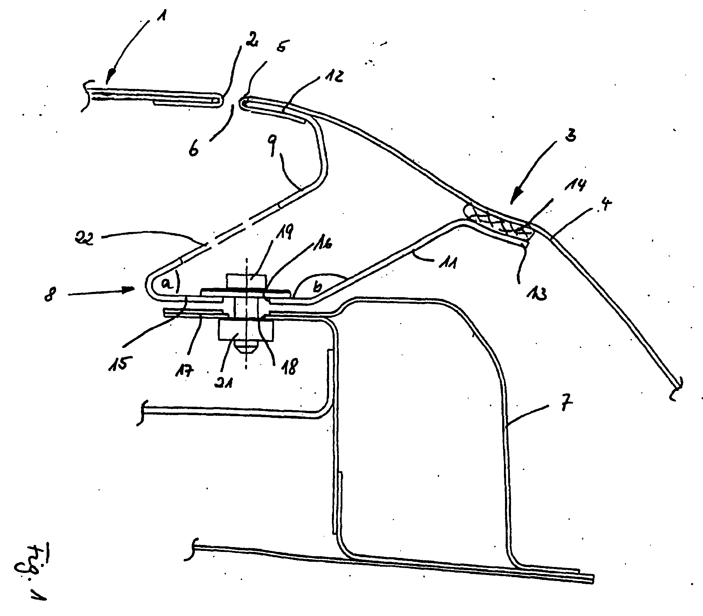

Der in Fig. 1 dargestellte Deformationsabschnitt 9 ist mit der Oberkante 5 des Kotflügels 4 verbunden. Um eine sichere und einfach herzustellende Verbindung zu erzielen, ist an den Deformationsabschnitt 9 ein Befestigungsbereich 12 angeformt. Der Befestigungsbereich 12 wird durch Umbiegen des oberen Bereichs des Deformationsabschnitts 9 gebildet. Der Befestigungsabschnitt 12 des Deformationsabschnitts 9 verläuft im wesentlichen parallel zu dem Verlauf des Kotflügels 4 an der Stelle, an der Deformationsabschnitt 9 und der Kotflügel 4 aufeinander treffen. Im dargestellten Ausführungsbeispiel sind Deformationsabschnitt 9 und Kotflügeloberkante 5 über eine Börtelung miteinander verbunden. Diese Verbindungstechnik ist deshalb besonders vorteilhaft, weil die Oberkante 5 des Kotflügels 4 bearbeitet werden muss, um keine scharfe Kante entstehen zu lassen. Mit einer Börtelung kann man beide Schritte - Kantenbearbeitung und Verbindung - vereinigen, was den Montageaufwand verringert.

Der Abstützabschnitt 11 ist mit einem von der Oberkante 5 beabstandeten Teil des Kotflügels 4 verbunden. Die Verbindungsstelle befindet sich im Übergangsbereich des horizontalen Bereichs des Kotflügels 4 zum vertikalen Bereich. Auch an dem Abstützabschnitt 11 ist ein Befestigungsbereich 13 vorgesehen, der durch Umbiegen des Abstützabschnitts 11 gebildet wird. Im dargestellten Ausführungsbeispiel sind Abstützabschnitt 11 und Kotflügel 4 mit Hilfe von Klebstoff 14 miteinander verbunden. Diese Verbindungstechnik bietet sich deshalb an, weil dadurch die nach außen weisende Oberfläche des Kotflügels 4 optisch nicht beeinträchtigt wird. Es ist jedoch auch denkbar, eine andere Verbindungstechnik, wie beispielsweise Schweißen zu wählen. In diesem Fall könnte - will man den Nachbehandlungsaufwand gering halten - an dem Kotflügel auf der nach außen weisenden Oberfläche in Höhe der Schweißverbindung eine Zierleiste angeordnet sein.

Deformationsabschnitt 9 und Abstützabschnitt 11 sind über einen Verbindungsabschnitt 15 miteinander verbunden. Dieser bildet den unteren Teil des U's zwischen den beiden Schenkeln. Über den Verbindungsabschnitt 15 sind jedoch auch das Verstärkungselement 8 mit dem Fahrzeugaufbau 7 verbunden. Im dargestellten Ausführungsbeispiel ist diese Verbindung über eine lösbare Verbindung, nämlich eine Schraubverbindung, hergestellt. Dazu ist in den Verbindungsabschnitt 15 eine Bohrung eingebracht. Der Fahrzeugaufbau 7 weist einen Flansch 17 auf, in den ebenfalls eine Bohrung 18 eingebracht ist. Durch die Bohrungen 16 und 18 ist eine Schraube 19 geführt und mit einer Mutter 21 gesichert. Eine lösbare Verbindung hat den Vorteil, dass der Kotflügel 4 auf einfache Weise ausgewechselt werden kann. Jede andere Art der Verbindung ist jedoch auch denkbar.

Der Verbindungsabschnitt 15 des Verstärkungselementes 8 ist eben ausgeführt und liegt auf dem ebenfalls eben ausgeführten Flansch 17 des Fahrzeugaufbaus 7 auf. Für beide Bauteile ist jede andere erdenkliche geometrische Ausgestaltung möglich, sie müssen nur so aufeinander abgestimmt sein, dass eine Verbindung zwischen ihnen herzustellen ist.

Auch der Deformationsabschnitt 9 und der Abstützabschnitt 11 weisen einen ebenen Bereich auf. Diese ebenen Bereiche der Abschnitte 9 und 11 sind in dem dargestellten Ausführungsbeispiel parallel ausgerichtet. Der Deformationsabschnitt 9 und der Verbindungsabschnitt 15 umschließen dabei einen spitzen Winkel a; wohingegen der Abstützabschnitt 11 und der Verbindungsabschnitt 15 einen stumpfen Winkel b umschließen.

An den ebenen Bereich des Deformationsabschnitts 9 schließt sich ein gebogener Bereich an, der wiederum in den Befestigungsbereich 12 über geht. In den ebenen Bereich des Deformationsabschnitts 9 sind Ausnehmungen 22 eingebracht. Diese dienen der einfacheren Montage der Schraubverbindung zwischen Verstärkungselement 8 und Fahrzeugaufbau 7. Die Ausnehmungen können neben der Vereinfachung der Montage eine weitere Funktion erfüllen, nämlich den Deformationsabschnitt 9 gezielt zu schwächen, damit die Oberkante 5 des Kotflügels bei einer Krafteinwirkung ausreichend nachgiebig ist. Der Deformationsabschnitt 9 kann auch jede andere Kontur aufweisen, die die nachgiebigen Eigenschaften dieses Abschnitts begünstigt.

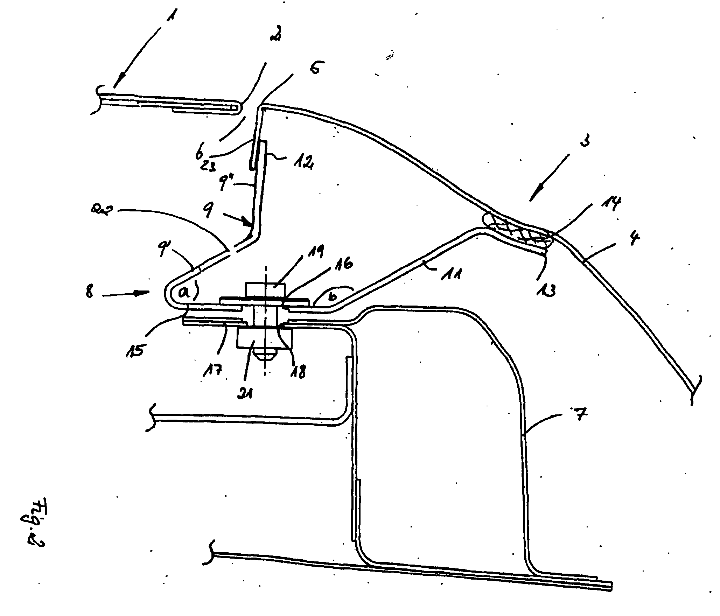

Eine solche weitere Kontur ist in Fig. 2 dargestellt. Der Deformationsabschnitt 9 besteht hier aus zwei geraden Teilabschnitten 9' und 9'', die in einem bestimmten Winkel zueinander angeordnet sind. Der Teilabschnitt 9' schließt sich an den Verbindungsabschnitt 15 an und weist eine Ausnehmung 22 auf. Der Teilabschnitt 9'' ragt senkrecht nach oben und ist über einen Befestigungsbereich 12 mit dem Kotflügel 3 verbunden. Dazu weist der Kotflügel 3 im Bereich seiner Oberkante 5 ebenfalls einen Befestigungsbereich 23 auf. Der Befestigungsbereich 23 ist rechtwinklig zum Kotflügelverlauf im Bereich der Oberkante 5 angeordnet und in Richtung Fahrzeugaufbau 7 ausgerichtet. Somit verlaufen die beiden Befestigungsbereiche 23 und 12 parallel. In der in Fig. 2 dargestellten Schnittdarstellung überdecken sie sich zumindest teilweise. In diesem Überdeckungsbereich sind sie miteinander verbunden. Auch bei dieser Verbindung sind alle möglichen Verbindungstechniken dankbar. Beispielsweise sei hier eine Schweißverbindung genannt.

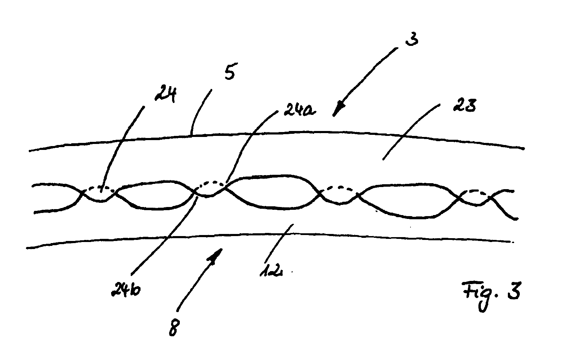

Damit die erfindungsgemäße Anordnung auch ausreichend nachgiebig ist, sind Kotflügel 3 und Deformationsabschnitt 9 nicht über die gesamte Länge des Verstärkungselements 8 miteinander verbunden (vgl. Fig. 3). Vielmehr überdecken sich die Befestigungsbereiche 23 und 12 nur in voneinander beabstandeten Bereichen 24. Diese Bereiche 24 entstehen dadurch, dass der Kotflügel 3 und der Deformationsabschnitt 9 Anformungen 24a und 24b aufweisen, die so aufeinander abgestimmt sind, dass sie sich in den Bereichen 24 überdecken. Die Anformungen 24a bzw. 24b stellen Verlängerungen der Bauteile dar. In dem dargestellten Ausführungsbeispiel entsteht durch die Anformungen 24a bzw. 24b ein wellenförmiger Rand der Befestigungsbereiche 12 und 23.

Der Abstützabschnitt 11 ist relativ zum Befestigungsabschnitt so ausgerichtet, dass er in etwa senkrecht auf den Kotflügel 4 stößt. Auch hier ist jede andere Ausrichtung denkbar, die eine ausreichende Stabilisierung der Kotflügelanordnung gewährleistet.

Durch die nachgiebige Gestaltung eines Schenkels des Verstärkungselements 8, des Deformationsabschnitts 9, wird gewährleistet, dass die Oberkante 5 des Kotflügels 4 ausreichend nachgibt. Somit kann das Verletzungsrisiko bei einem Fußgängeraufprall auf die Frontpartie eines Fahrzeugs erheblicht gesenkt werden. Gleichzeitig stellt aber der zweite Schenkel des Verstärkungselements 8, der Abstützabschnitt 11, eine ausreichende strukturelle Steifigkeit der gesamten Kotflügelanordnung 3 sicher, so dass der nachgiebig gestaltete Kotflügel in seinen sonstigen Funktionen nicht beeinträchtigt ist.

## Patentansprüche

1. Kotflügelanordnung, die sich zumindest teilweise über einem Fahrzeugaufbau (7) erstreckt, mit einem Kotflügel (3), der eine Oberkante (5) aufweist, und einem aus mehreren Abschnitten bestehenden Verstärkungselement, welches entlang der Oberkante (5) auf der Innenseite des Kotflügels angeordnet ist, wobei die Abschnitte (9,11,15) des Verstärkungselementes (8) mit dem Kotflügel (3) ein Hohlprofil bilden,
**dadurch gekennzeichnet,**
**dass** das Verstärkungselement (8) über mindestens einen das Hohlprofil bildenden Verbindungsabschnitt (15) mit dem Fahrzeugaufbau verbunden ist.

2. Kotflügelanordnung nach Anspruch 1,
**dadurch gekennzeichnet,**
**dass** das Verstärkungselement (8) einen Deformationsabschnitt (9) aufweist, welcher mit der Oberkante (5) des Kotflügels (4) verbunden ist.

3. Kotflügelanordnung nach Anspruch 1 oder 2,
**dadurch gekennzeichnet,**
**dass** das Verstärkungselement (8) einen Abstützabschnitt (11) aufweist, welcher mit einem von der Oberkante (5) beabstandeten Kotflügelabschnitt verbunden ist.

4. Kotflügelanordnung nach Anspruch 3,
**dadurch gekennzeichnet,**
**dass** der Verbindungsabschnitt (15) zwischen dem Deformationsabschnitt (9) und dem Abstützabschnitt (11) angeordnet ist.

5. Kotflügelanordnung nach einem der vorhergehenden Ansprüche,
**dadurch gekennzeichnet,**
**dass** das Verstärkungselement (8) einen u-förmigen Querschnitt aufweist.

6. Kotflügelanordnung nach einem der vorhergehenden Ansprüche
**dadurch gekennzeichnet,**
**dass** das Verstärkungselement (8) im wesentlichen in Fahrzeuglängsrichtung ausgerichtet ist.

7. Kotflügelanordnung nach einem der vorhergehenden Ansprüche
**dadurch gekennzeichnet,**
**dass** sich das Verstärkungselement (8) einstückig entlang der gesamten Oberkante (5) des Kotflügels (4) erstreckt.

8. Kotflügelanordnung nach einem der Ansprüche 1 bis 6
**dadurch gekennzeichnet,**
**dass** mehrere Verstärkungselemente (8) hintereinander entlang der Oberkante (5) des Kotflügels (4) angeordnet sind.

9. Kotflügelanordnung nach Anspruch 3,
**dadurch gekennzeichnet,**
**dass** Deformations- (9) und Abstützabschnitt (11) im wesentlichen parallel zueinander ausgerichtet sind.

10. Kotflügelanordnung nach einem der vorhergehenden Ansprüche
**dadurch gekennzeichnet,**
**dass** an Deformations- (9) und Abstützabschnitt (11) jeweils ein Befestigungsbereich (12, 13) vorgesehen ist.

11. Kotflügelanordnung nach Anspruch 10,
**dadurch gekennzeichnet,**
**dass** die Befestigungsbereiche (12, 13) jeweils parallel zum Verlauf des Kotflügelbereichs ausgerichtet sind, an dem sie angelenkt sind.

12. Kotflügelanordnung nach Anspruch 11,
**dadurch gekennzeichnet,**
**dass** sich die Befestigungsbereiche (12, 13) über die gesamte Länge des Verstärkungselementes (8) erstrecken.

13. Kotflügelanordnung nach Anspruch 11,
**dadurch gekennzeichnet,**
**dass** die Befestigungsbereiche (12, 13) den Kotflügel (3) in voneinander beabstandeten Bereichen (24) überdecken.

14. Kotflügelanordnung nach einem der vorhergehenden Ansprüche,
**dadurch gekennzeichnet,**
**dass** das Verstärkungselement (8) über eine lösbare Verbindung mit dem Fahrzeugaufbau (7) verbunden ist.

15. Kotflügelanordnung nach einem der vorhergehenden Ansprüche,
**dadurch gekennzeichnet,**
**dass** in dem Verstärkungselement (8) mindestens eine Ausnehmung (22) vorgesehen ist.

16. Kotflügelanordnung nach Anspruch 15,
**dadurch gekennzeichnet,**
**dass** die Ausnehmung (22) in den Deformationsabschnitt (9) eingebracht ist.

## Claims

1. Fender arrangement, which extends at least partially over a vehicle body (f), with a fender (3) which has an upper edge (5) and a reinforcing element consisting of several sections, which is arranged along the said upper edge (5) on the inside of the fender, the sections (9, 11, 15) of the said reinforcing element (8) forming a hollow profile with the fender (3),
**characterised in that**
the reinforcing element (8) is connected to the vehicle body by at least one connecting section (15) forming the hollow profile.

2. Fender arrangement according to Claim 1,
**characterised in that**
the reinforcing element (8) has a deformation section (9) which is connected to the said upper edge (5) of the fender (4).

3. Fender arrangement according to Claims 1 or 2,
**characterised in that**
the reinforcing element (8) has a support section (11) which is connected to a fender section arranged a distance away from the upper edge (5).

4. Fender arrangement according to Claim 3,
**characterised in that**
the connecting section (15) is positioned between the deformation section (9) and the support section (11).

5. Fender arrangement according to any of the preceding claims,
**characterised in that**
the reinforcing element (8) has a U-shaped cross-section.

6. Fender arrangement according to any of the preceding claims,
**characterised in that**
the reinforcing element (8) is orientated essentially in the longitudinal direction of the vehicle.

7. Fender arrangement according to any of the preceding claims,
**characterised in that**
the reinforcing element (8) extends in one piece along the entire upper edge (5) of the fender (4).

8. Fender arrangement according to any of Claims 1 to 6,
**characterised in that**
a plurality of reinforcing elements (8) are arranged one behind the other along the upper edge (5) of the fender (4).

9. Fender arrangement according to Claim 3,
**characterised in that**
the deformation section (9) and the support section (11) are essentially orientated parallel to one another.

10. Fender arrangement according to any of the preceding claims,
**characterised in that**
a respective fixing zone (12, 13) is provided on the deformation section (9) and on the support section (11).

11. Fender arrangement according to Claim 10,
**characterised in that**
the fixing zones (12, 13) are each orientated parallel to the extension of the fender area, to which they are linked.

12. Fender arrangement according to Claim 11,
**characterised in that**
the fixing zones (12, 13) extend over the full length of the reinforcing element (8).

13. Fender arrangement according to Claim 11,
**characterised in that**
the fixing zones (12, 13) overlap with the fender (3) in areas (24) a distance apart from one another.

14. Fender arrangement according to any of the preceding claims,
**characterised in that**
the reinforcing element (8) is connected to the vehicle body (7) by means of a detachable connection.

15. Fender arrangement according to any of the preceding claims,
**characterised in that**
at least one recess (22) is provided in the reinforcing element (8).

16. Fender arrangement according to Claim 15,
**characterised in that**
the recess (22) is formed in the deformation section (9).

## Revendications

1. Dispositif de garde-boue qui s'étend au moins partiellement sur une structure de véhicule (7) comprenant un garde-boue (3) qui présente une arête supérieure (5) et un élément de renforcement constitué de plusieurs tronçons et qui est agencé le long de l'arête supérieure (5) sur le côté intérieur du garde-boue, dans lequel les tronçons (9, 11, 15) de l'élément de renforcement (8) forment un profilé creux avec le garde-boue (3), **caractérisé en ce que** l'élément de renforcement (8) est relié à la structure de véhicule sur au moins un tronçon de liaison (15) formant le profilé creux.

2. Dispositif de garde-boue selon la revendication 1, **caractérisé en ce que** l'élément de renforcement (8) présente un tronçon de déformation (9) qui est relié à l'arête supérieure (5) du garde-boue (4).

3. Dispositif de garde-boue selon la revendication 1 ou 2, **caractérisé en ce que** l'élément de renforcement (8) présente un tronçon de soutien (11) qui est relié à un tronçon de garde-boue agencé à distance de l'arête supérieure (5).

4. Dispositif de garde-boue selon la revendication 3, **caractérisé en ce que** le tronçon de liaison (15) est agencé entre le tronçon de déformation (9) et le tronçon de soutien (11).

5. Dispositif de garde-boue selon l'une des revendications précédentes, **caractérisé en ce que** l'élément de renforcement (8) présente une section transversale en forme de U.

6. Dispositif de garde-boue selon l'une des revendications précédentes, **caractérisé en ce que** l'élément de renforcement (8) est orienté essentiellement dans la direction longitudinale du véhicule.

7. Dispositif de garde-boue selon l'une des revendications précédentes, **caractérisé en ce que** l'élément de renforcement (8) s'étend en un seul tenant le long de toute l'arête supérieure (5) du garde-boue (4).

8. Dispositif de garde-boue selon l'une des revendications 1 à 6, **caractérisé en ce que** plusieurs éléments de renforcement (8) sont agencés l'un derrière l'autre le long de l'arête supérieure (5) du garde-boue (4).

9. Dispositif de garde-boue selon la revendication 3, **caractérisé en ce que** le tronçon de déformation (9) et le tronçon de soutien (11) sont orientés essentiellement parallèlement l'un par rapport à l'autre.

10. Dispositif de garde-boue selon l'une des revendications précédentes, **caractérisé en ce qu'**une zone de fixation (12, 13) est prévue respectivement sur le tronçon de déformation (9) et sur le tronçon de soutien (11).

11. Dispositif de garde-boue selon la revendication 10, **caractérisé en ce que** les zones de fixation (12, 13) sont orientées respectivement parallèlement au profilé de la zone de garde-boue sur laquelle elles sont montées en articulation.

12. Dispositif de garde-boue selon la revendication 11, **caractérisé en ce que** les zones de fixation (12, 13) s'étendent sur toute la longueur de l'élément de renforcement (8).

13. Dispositif de garde-boue selon la revendication 11, **caractérisé en ce que** les zones de fixation (12, 13) recouvrent le garde-boue (3) dans des zones (24) agencées à distance l'une de l'autre.

14. Dispositif de garde-boue selon l'une des revendications précédentes, **caractérisé en ce que** l'élément de renforcement (8) est relié à la structure du véhicule (7) via une liaison détachable.

15. Dispositif de garde-boue selon l'une des revendications précédentes, **caractérisé en ce qu'**au moins un évidement (22) est prévu dans l'élément de renforcement (8).

16. Dispositif de garde-boue selon la revendication 15, **caractérisé en ce que** l'évidement (22) est ménagé dans le tronçon de déformation (9).
